# FASCICULE DE BREVET EUROPEEN

(11) **EP 0 504 002 B1**
(45) Date de publication et mention de la délivrance du brevet: **24.01.1996**
(21) Numéro de dépôt: 92400546.5
(22) Date de dépôt: 03.03.1992
(51) Int. Cl.: B29C 47/26

(54) **Dispositif pour extrudeuse permettant le gainage d'au moins deux âmes par un matériau de même nature, procédé de gainage en resultant**
Strangpressen mit einer Vorrichtung zum Beschichten wenigstens zweier Kerne mit einem gleichartigen Werkstoff und Beschichtungsverfahren
Apparatus for an extruder allowing the coating of, at least, two cores with a similar material and method of coating

(30) Priorité: 08.03.1991 FR 9102836
(43) Date de publication de la demande: 16.09.1992
(73) Titulaire: ELF ATOCHEM S.A., F-92800 Puteaux (FR)
(72) Inventeur: Bourdon, Raymond, F-64360 Monein (FR)

(56) Documents cités:
- EP-A- 0 188 939
- CH-A- 600 507
- CH-A- 658 608
- DE-A- 1 937 862
- DE-B- 1 190 646
- FR-A- 2 033 631
- FR-A- 2 357 042
- FR-A- 2 605 790
- PATENT ABSTRACTS OF JAPAN vol. 12, no. 302 (M-732)(3149) 17 Août 1988 & JP-A-63 078 726 (MITSUBISHI PLASTIC IND LTD)

## Description

La présente invention concerne un dispositif adaptable à tout système permettant de l'alimenter en matière fondue susceptible de recevoir au moins deux filières.

Il s'agit plus particulièrement d'une tête d'extrudeuse - dite tête multifonction-pouvant recevoir au moins deux filières traversées par des âmes identiques ou différentes et permettant le recouvrement des dites âmes par un matériau de même nature.

L'invention concerne également le procédé de fabrication d'au moins deux matériaux complexes comprenant des âmes identiques ou différentes recouvertes par une gaine unique.

Les âmes peuvent être constituées par des matériaux fluides ou solides susceptibles de s'écouler au travers de la filière.

La gaine ou matière de recouvrement peut être constituée de toute matière susceptible d'être extrudée ou filmable.

Ce dispositif et le procédé qui en découle s'appliquent notamment à la fabrication d'au moins deux matériaux complexes, constitués d'âmes identiques ou différentes, en matière plastique, renforcées ou non de fibres revêtues par une gaine de même nature, constituée par une résine thermoplastique dont le point de fusion est sensiblement voisin ou supérieur aux matières constitutives des âmes.

Les matières constitutives des âmes peuvent être des résines thermoplastiques identiques ou différentes de celles constituant la matière unique de recouvrement.

Il est connu de gainer un matériau complexe constitué d'une gaine plastique contenant une âme fragile à la température d'extrusion de la gaine.

On sait également gainer une âme métallique, notamment un câble électrique, par extrusion.

Le document CH-A-600507 décrit une installation pour la fabrication de conducteurs électriques isolés, qui comprend une extrudeuse, une tête d'extrusion à plusieurs filières pourvue d'un conduit d'entrée raccordé à l'extrudeuse et de plusieurs conduits de répartition aboutissant chacun à une des filières, des moyens d'entraînement de plusieurs fils passant chacun dans une des filières, des moyens pour commander la vitesse de chaque fil de façon indépendante, des moyens d'asservissement qui règlent l'ouverture de chaque conduit de répartition en fonction de la vitesse du fil correspondant, et et des moyens de règlage qui maintiennent en permanence la pression dans le conduit d'entrée à une valeur constante.

La demande de brevet FR-A-2033631 concerne une machine à filières multiples pour fabriquer des fils gaînés en matière plastiques qui comprend une extrudeuse refoulant de la matière plastique dans une cavité contrale d'un plateau qui porte plusieurs filières réparties sur sa périphérie, le centre du plateau étant réuni à chaque filière par un canal radical sur lequel est intercalée une vanne d'obturation réglable.

Tous les procédés connus pour effectuer ces opérations ne peuvent effectuer le gainage que d'une seule âme. Pour recouvrir plusieurs âmes différentes (ou identiques) par une gaine de même nature , il est nécessaire d'arrêter l'extrusion de la gaine pour procéder au nettoyage, voir au changement de la filière. Il peut également être nécessaire de modifier les paramètres de l'extrudeuse et des appareillages annexes.

On a maintenant trouvé un dispositif pour extrudeuse permettant le gainage d'au moins deux âmes par une gaine de même nature, ledit dispositif étant caractérisé en ce qu'il comprend un plateau sensiblement cylindrique (1), dans lequel sont pratiqués au moins deux évidements (2) de forme sensiblement cylindrique, un tube de jonction (3), dénommé pipette, pouvant être disposé dans le plan du plateau et généralement vissé dans le corps dudit plateau (1).

Le tube de jonction (3) peut réaliser la liaison avec au moins une extrudeuse ou tout système permettant d'envoyer de la matière fondue et le plateau et en assurer son alimentation en matière de recouvrement. Le tube de jonction (3) est avantageusement prolongé à l'intérieur du plateau par un canal (4) - figure (3) - qui peut atteindre le centre dudit plateau.

Selon l'invention, chaque évidement peut recevoir une filière (F) qui est associée ou non à un injecteur et à un système de conditionnement de la gaine.

Chaque évidement (2) peut notamment recevoir un outillage tel que décrit dans le brevet EP 188939 et dont le contenu est incorporé par référence dans la présente.

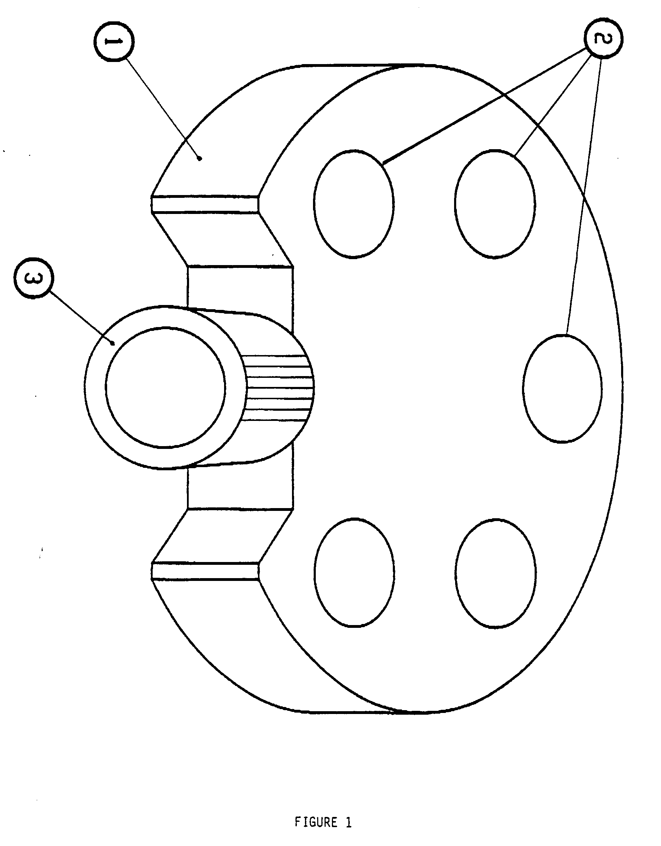

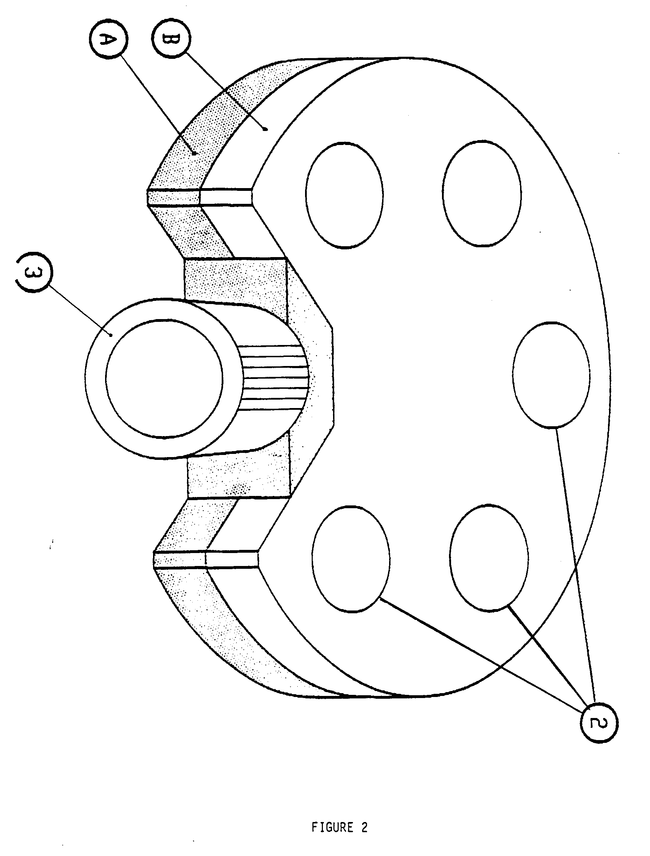

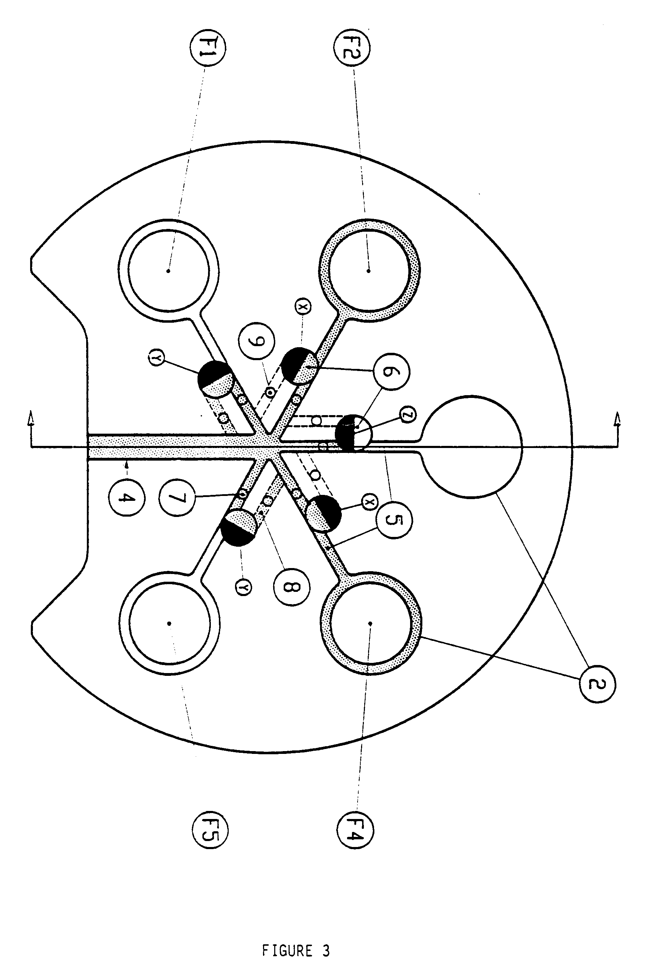

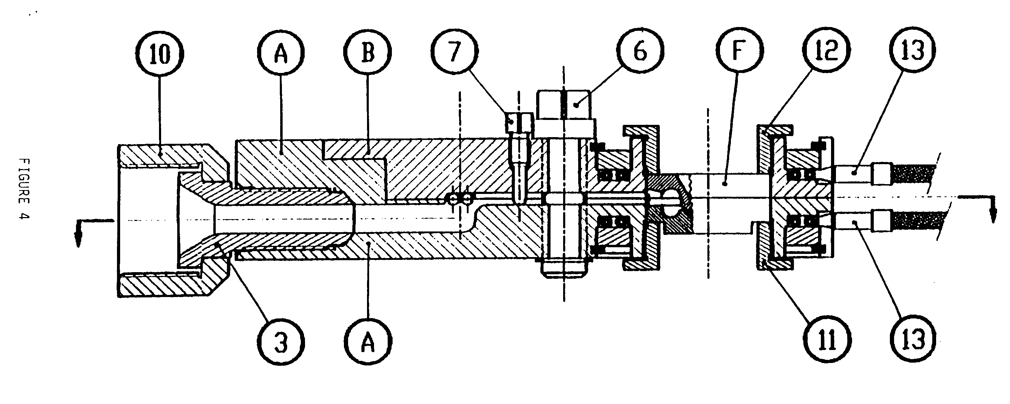

Avantageusement, le dispositif conforme à l'invention, peut être constitué par deux plaques (A) et (B) sensiblement cylindriques qui s'imbriquent l'une dans l'autre pour former un plateau unique tel que représenté schématiquement sur la figure (2).

Dans ce dispositif, le tube de jonction (3) peut être fixé avantageusement dans la plaque inférieure (A).

Les évidements peuvent être disposés à la périphérie du plateau selon un arrangement circulaire comme visualisé sur les figures (1) et (2).

Chaque évidement (2) est relié au canal (4) par un canal (5) qui peut être muni d'une clé de purge (6) et au moins d'une vis micrométrique (7) permettant de régler le débit de la matières de recouvrement à l'entrée du système d'alimentation de la filière.

Chaque canal (5) peut être muni d'un indicateur de pression situé de préférence entre la vis micrométrique (7) et la clé de purge (6).

Complémentairement, chaque clé de purge (6) peut communiquer avec une voie (8), représentée en pointillé sur la figure (3) pouvant être munie d'une vis micrométrique, limitatrice de débit de purge (9) qui maintient la pression constante dans le canal (5) après la vis (7) et annule l'écoulement qui existe en position clé de purge "travail".

Le plateau (1) peut être fixé à la sortie d'une extrudeuse comme représenté schématiquement sur la figure (4) par un écrou de serrage (10) qui appuie le tube de jonction (3) vissé dans la plaque (A) réalisant ainsi une liaison étanche entre le cylindre de l'extrudeuse et le canal central d'alimentation (4) tout en laissant une latitude de rotation du plateau.

Selon l'invention, le nombre d'évidements (2) pouvant recevoir une filière (F), ou tout autre outillage, est au moins égal à 2.

Mais, selon la nature et la complexité des âmes à gainer, on peut envisager un nombre d'évidements plus grand, et on ne sortirait pas du cadre de l'invention si ce nombre est supérieur à 10.

Dans un souci de clarté, le dispositif représenté sur les figures (1), (2) et (3), ne comporte que 5 évidements.

Chaque filière (F) et/ou outillage est ajusté dans l'évidement d'une façon telle que l'axe du canal (5) corresponde à l'axe d'entrée de la filière (F). A cette fin, on agit sur les écrous de serrage inférieurs (11) et supérieurs (12) de façon à positionner le trou d'entrée de filière en face du canal d'entrée d'arrivée de la matière de recouvrement.

Ces deux écrous sont ensuite bloqués pour immobiliser la filière dans son évidement.

Le dispositif selon l'invention peut effectuer indifféremment le recouvrement d'âmes dirigées de haut en bas ou de bas en haut.

Les clés de purges (6), munies notamment de rainures horizontales et verticales, peuvent prendre plusieurs positions X, Y, Z,... comme représenté sur la figure (3).

S'agissant de la position "alimentation de filière" : position X, symbolisée par (X) sur la figure (3), le flux de matière nécessaire pour le gaînage d'une âme quelconque provenant d'une extrudeuse et s'écoulant au travers de la pipette (3) puis du canal central (4) peut alimenter une filière (F) par l'intermédiaire du canal (5). C'est par exemple le cas des filières F2 et F4 de la figure (3).

En position "Purge individuelle" : position Y, symbolisé par (Y) sur la figure (3) le flux de matière est détourné du canal (5) au niveau de la clé de purge (6), soit vers l'extérieur, soit vers une voie de purge (8) dans l'éventualité où le dispositif conforme à l'invention est muni d'une telle voie. C'est le cas par exemple des voies correspondantes aux filière F1 et F5 de la figure (3). La matière circulant dans cette voie (8) peut être avantageusement recyclée notamment dans l'extrudeuse.

Cette possibilité notamment de détourner le flux de matière permet de modifier éventuellement les paramètres des filières et/ou outillages court-circuités sans modifier le flux de matière de gainage des autres filières en service,les débits et/ou pressions globaux sont conservés.

La position "Fermée" : position Z, symbolisée par (Z) sur la figure (3) correspond à la fermeture totale du canal (5).

Ce cas se présente lorsque l'évidement correspondant n'est pas muni de filière, cas schématisé sur la figure (3), ou bien que l'on ait arrêté le fonctionnement du canal (5) correspondant à cet évidement.

Les clés de purge (6) peuvent également prendre des positions intermédiaires entre les positions X, Y et Z.

Dans ce cas, la fonction limitatrice de débit des vis micrométriques (7) peut être réalisée par la clé de purge elle-même jouant ainsi le rôle de "servo-valve".

Selon le dispositif conforme à l'invention, une opération de changement de filière et/ou d'outillage n'entraîne pas l'arrêt de l'ensemble et ne perturbe pas le débit d'alimentation en matière de recouvrement des autres filières. A cette fin, en position purge de la vanne correspondant à cet outillage, la clé de purge simulera le débit de la filière avant son arrêt.

Avantageusement, toutes ou parties des opérations de fermeture et d'ouverture des clés de purges et des vis micrométriques peuvent être réglées automatiquement.

Les évidements de la tête multifonction peuvent être munies de systèmes de chauffage (13) constitués notamment de résistances électriques qui peuvent être modulés ensemble ou séparément assurant ainsi un éventuel gradient de température ajusté à chaque filière et/ou outillage.

Au moyen du dispositif conforme à l'invention, il est possible de fabriquer au moins deux matériaux complexes constitués par une gaine de même nature contenant des âmes identiques ou différentes.

Selon le procédé, on fabrique des matériaux complexes constitués par une gaine de résine plastique de même nature, ledit procédé étant caractérisé en ce que la gaine de résine plastique de même nature recouvre des âmes différentes.

Selon la technique considérée, toutes résines plastiques extrudables et/ou filmables peuvent convenir pour recouvrir les âmes.

Elles peuvent par exemple être choisies dans le groupe constitué par les polymères ou copolymères vinyliques, styréniques, acryliques ou méthacryliques, oléfiniques, ou encore parmi les résines fluorées, les polyamides, les polyesters, les polycarbonates, les propionates de cellulose, les polyphénylènesulfones, les polyamideimides, les polyimides, les polyéthérimides, les polyéthersulfones, les polyétheréthercétones et les mélanges de ces composés ainsi que tout produit filmable.

La gaine peut être constituée d'un mélange de résine plastique et d'additifs tels que colorants, farines minérales ou végétales ayant des propriétés complémentaires vis-à-vis des constituants de l'âme.

Les matériaux utilisés pour l'âme peuvent être choisis parmi les matériaux fluides ou solides, susceptibles de s'écouler au travers d'une filière et/ou outillage.

L'âme peut être constituée par des fils, fibres et poudres métalliques, organiques, inorganiques et végétales et les mélanges de ces divers constituants.

Les matériaux utilisés pour l'âme peuvent être également choisis parmi les résines plastiques extrudables utilisées pour la matière de gainage.

A titre d'illustration de fibres organiques utilisables pour constituer l'âme on citera les fibres de polyamides, de polyesters, polyaryliques et polyfluorés.

A titre d'illustration de fils ou fibres métalliques utilisables pour constituer l'âme, on citera les fils de cuivre, d'aluminium et de fer en longueur continue ou discontinue par intermittences.

A titre d'illustration de fibres végétales utilisables pour constituer l'âme, on citera les fibres de coton, de laine, de lin, de sisal, de soie et de bois.

A titre d'illustration de fibres inorganiques utilisables pour constituer l'âme, on citera les fibres de verre, les fibres de carbone, les fibres en céramiques notamment les fibres à base de nitrure de bore et de silicium.

Les fibres organiques et/ou inorganiques peuvent être imprégnées de charges pleines, poreuses ou creuses qui peuvent être constituées par des poudres, billes ou lamelles, lesdites charges étant organiques, métalliques ou inorganiques.

A titre d'illustration de telles charges susceptibles d'imprégner les fibres organiques et/ou inorganiques utilisables pour constituer l'âme on citera les poudres de polyamides, de polymétacrylates de méthyle, les billes de verre ou de métal, les poudres de graphite, les poudres métalliques, telles que le sulfure de molybdène, les sphères de verre et de métal.

Le procédé selon l'invention convient particulièrement au gainage d'âmes fragiles à la température d'extrusion du matériau unique de gainage.

De telles âmes fragiles peuvent être constituées partiellement ou totalement de poudres inertes et/ou réactives et de produits actifs.

S'agissant de poudres réactives, on citera les poudres de catalyseur, les agents gonflants, les poudres enzymatiques, les poudres oxydables, telles que les poudres alimentaires, les poudres de micro-organisme, les levures et les mélanges de ces divers constituants.

S'agissant des poudres inertes on citera les poudres de polyamide et les poudres de polyoléfine.

S'agissant de produits actifs, on citera des huiles essentielles, essences de plantes et produits liquides volatils ou non.

Ainsi, pour des applications notamment médicales, on peut réaliser un matériau complexe constitué d'une gaine en polyoléfine chargée en farine végétale telle que farine de maïs et d'une âme en poudre minérale imprégnée de micro-organismes.

L'épaisseur de la gaine de recouvrement identique ou différente selon l'âme à gainer, est limitée par les propriétés du matériau extrudable ou filmable.

Dans les applications de gainage, elle est au plus égale au millimètre. Elle pourra être plus épaisse dans d'autres applications.

Le diamètre du matériaux complexe peut varier dans de grandes proportions.

Pour les composites, ce diamètre est au moins égal à 0,1 mm et de préférence compris entre 0,5 et 5 mm.

### L'exemple suivant illustre l'invention :

A partir d'une extrudeuse type monovis de diamètre B30-20D, muni d'une tête multifonction, conforme à l'invention équipée de 5 filières comme décrites dans le brevet européen 188939, on extrude une gaine de polypropylène (homopolymère du propylène de melt-index égal à 35 g/10 mn, mesuré à 230°C sous une charge de 2,16 kg) à une température de 215°C et une vitesse d'extrusion de 100 mètres par minute pour recouvrir respectivement les âmes suivantes :
- **filière 1 :** Fibre de verre de 320 tex
- **filière 2 :** Fibre de verre de 320 tex imprégnée de poudre PVDF FORAFLON
- **filière 3 :** Fibre de verre de 160 tex imprégnée d'une poudre de polyamide ORGASOL 2002.D Nat.
- **filière 4 :** Fibre de verre de 320 tex imprégnée de poudre de polyamide (identique à celle du matériau gainé en filière 3).
- **filière 5 :** Fibre de verre de 320 tex.

La pression des filières est comprise entre 5 et 30 bars.

Pour les filières 1, 2, 3, et 5, l'âme est dirigée de haut en bas, pour la filière 4, l'âme est dirigée de bas en haut.

La vitesse du tireur du produit de chaque filière est fonction de l'épaisseur désirée.

Elle est de l'ordre de 70 à 200 m/mn.

L'essai a duré 30 mn. Dans le tableau 1 ci-après, on indique le pourcentage en poids de fibre, poudre et gaine dans le matériau fini.

**Tableau 1**

| Produit de la filière | Fibre | Poudre | Gaine |
|---|---|---|---|
| 1 | | | |
| 2 | 67 | 15 | 18 |
| 3 | 57 | 12 | 31 |
| 4 | 77 | 13 | 10 |
| 5 | | | |

## Revendications

1. Dispositif, pour extrudeuse, de gaînage d'au moins deux âmes par une gaine de même nature, comprenant un plateau (1) constituée par deux plaques (A) et (B) sensiblement cylindriques s'imbriquant l'une dans l'autre dans lequel sont pratiqués au moins deux évidements (2) pouvant recevoir une filière (F) et/ou un outillage, un tube de jonction (3) prolongé à l'intérieur du plateau (1) par un canal (4), ledit canal (4) étant relié à un évidement par un canal (5), caractérisé en ce que chaque canal (5) est muni d'une clé de purge (6) communiquant avec une voie (8) munie d'une vis limitatrice de débit de purge (9) et, d'au moins une vis micrométrique (7).

2. Dispositif selon la revendications 1, caractérisé en ce que les évidements peuvent être munis de systèmes de chauffage (13).

3. Dispositif selon l'une des revendications 1 ou 2, caractérisé en ce que la filière (F) et/ou l'outillage est ajusté dans l'évidement (2) d'une façon telle que l'axe du canal (5) corresponde à l'axe de l'entrée de la filière et/ou de l'outillage.

4. Application du dispositif selon l'une des revendications 1 à 3 a la fabrication d'au moins deux matériaux complexes constitués par une gaine de résine plastique de même nature, recouvrant des âmes différentes.

5. Application selon la revendication 4, caractérisée en ce que la gaine de résine plastique est constitué par toutes résines extrudables et/ou filmables.

6. Application selon la revendication 5, caractérisée en ce que les résines plastiques sont choisies dans le groupe constitué par les polymères ou copolymères vinyliques, styréniques, acryliques ou méthacryliques, oléfiniques, les résines fluorés, les polyamides, les polyesters, les polycarbonates, les propionates de cellulose, les polyphénylènesulfones, les polyamideimides, les polyimides, les polyétherimides, les polyestersulfones, les polyetherethercétones et les mélanges de ces composés.

7. Application selon la revendication 4, caractérisée en ce que l'âme du matériau complexe est choisi parmi les matériaux fluides ou solides susceptibles de s'écouler au travers d'un outillage et/ou filière.

8. Application selon la revendication 7, caractérisée en ce que l'âme est constitué par des fils, fibres et poudres métalliques, organiques, inorganiques et végétales et les mélanges de ces divers constituants.

9. Application selon la revendication 8, caractérisée en ce que les fibres organiques sont choisies parmi les fibres de polyamide, de polyester et polyfluorés.

10. Application selon la revendication 8, caractérisée en ce que les fils métalliques sont choisies parmi les fils de cuivre, d'aluminium et de fer.

11. Application selon la revendication 7, caractérisée en ce que les fibres végétales sont choisies parmi les fibres de coton, de sisal, de laine, de lin, de soie et de bois.

12. Application selon la revendication 7, caractérisée en ce que les fibres inorganiques sont choisies parmi les fibres de verre, les fibres de carbone et les fibres en céramique.

13. Application selon la revendication 7, caractérisée en ce que les fibres organiques et/ou inorganiques sont imprégnées de charges pleines, poreuses ou creuses.

14. Application selon la revendication 13, caractérisée en ce que les charges pleines, poreuses ou creuses sont choisies parmi des poudres, des billes ou des lamelles organiques, métalliques ou inorganiques.

15. Application selon la revendication 14, caractérisée en ce que les poudres organiques sont choisies parmi les poudres de polyamide, les poudres de polyméthacrylate de méthyle et les poudres de graphite.

16. Application selon la revendication 14, caractérisée en ce que les poudres métalliques sont choisies parmi les poudres de sulfure de molybdène.

17. Application selon la revendication 4, caractérisée en ce qu'il consiste à gainer au moins deux âmes fragiles à la température d'extrusion du matériau unique de gaînage.

18. Application selon la revendication 17, caractérisée en ce que les âmes fragiles sont choisies parmi des poudres inertes et/ou réactives.

19. Application selon la revendication 18, caractérisée en ce que les poudres réactives sont choisies parmi les poudres de catalyseurs, les agents gonflants, les poudres enzymatiques, les poudres alimentaires, les poudres de micro-organisme et les mélanges de ces divers constituants.

20. Application selon les revendications 18 et 19 caractérisée en ce que les poudres inertes sont choisies parmi les poudres de polyoléfine et les poudres de polyamide.

## Claims

1. Device, for an extruder, for jacketing at least two cores by a jacket of the same type, comprising a plate (1) is constituted by two substantially cylindrical plates (A) and (B) which fit into each other in which at least two cavities (2) are made which can receive a die (F) and/or a tool, a junction tube (3) extended inside the plate (1) by means of a channel (4), the said channel (4) being connected to a cavity via a channel (5), characterised in that each channel (5) is provided with a purge key (6) communicating with a path (8) provided with a purge flow rate-limiting screw (9), and with at least one micrometer screw (7).

2. Device according to Claim 1, characterised in that the cavities may be provided with heating systems (13).

3. Device according to one of Claims 1 and 2, characterised in that the die (F) and/or the tool is adjusted in the cavity (2) in such a manner that the axis of the channel (5) corresponds to the entry axis of the die and/or of the tool.

4. Application of the device according to one of Claims 1 to 3 to the manufacture of at least two complex materials constituted by a jacket of plastic resin of the same type, covering different cores.

5. Application according to Claim 1, characterised in that the jacket of plastic resin is constituted by all extrudable and/or film-formable resins.

6. Application according to Claim 5, characterised in that the plastic resins are chosen from the group constituted by vinyl, styrene, acrylic or methacrylic, olefin polymers or copolymers, fluorinated resins, polyamides, polyesters, polycarbonates, cellulose proprionates, polyphenylenesulphones, polyamideimides, polyimides, polyetherimides, polyestersulphones, polyetheretherketones and mixtures of these compounds.

7. Application according to Claim 4, characterised in that the core of the complex material is chosen from fluid or solid materials capable of flowing through a tool and/or die.

8. Application according to Claim 7, characterised in that the core is constituted by metallic, organic, inorganic and vegetable filaments, fibres and powders, and by mixtures of these various constituents.

9. Application according to Claim 8, characterised in that the organic fibres are chosen from polyamide, polyester and polyfluorinated fibres.

10. Application according to Claim 8, characterised in that the metallic filaments are chosen from copper, aluminium and iron filaments.

11. Application according to Claim 7, characterised in that the vegetable fibres are chosen from cotton, hemp, wool, flax, silk and wood fibres.

12. Application according to Claim 7, characterised in that the inorganic fibres are chosen from glass fibres, carbon fibres and ceramic fibres.

13. Application according to Claim 7, characterised in that the organic and/or inorganic fibres are impregnated with solid, porous or hollow fillers.

14. Application according to Claim 13, characterised in that the solid, porous or hollow fillers are chosen from organic, metallic or inorganic powders, balls or lamellae.

15. Application according to Claim 14, characterised in that the organic powders are chosen from polyamide powders, polymethyl methacrylate powders and graphite powders.

16. Application according to Claim 14, characterised in that the metallic powders are chosen from molybdenum sulphide powders.

17. Application according to Claim 4, characterised in that it consists in jacketing at least two cores which are sensitive at the extrusion temperature of the single jacketing material.

18. Application according to Claim 17, characterised in that the sensitive cores are chosen from inert and/or reactive powders.

19. Application according to Claim 18, characterised in that the reactive powders are chosen from catalyst powders, blowing agents, enzyme powders, food powders, microorganism powders and mixtures of these various constituents.

20. Application according to Claims 18 and 19, characterised in that the inert powders are chosen from polyolefin powders and polyamide powders.

## Patentansprüche

1. Vorrichtung für eine Strangpresse zum Beschichten mindestens zweier Kerne mit einer gleichartigen Beschichtung, enthaltend eine aus zwei fast zylindrischen, ineinander übergreifenden Platten (A) und (B) bestehende Platte (1), in die mindestens zwei Aussparungen (2), die eine Düse (F) und/oder eine Form aufnehmen können, und ein durch einen Kanal (4) zum Inneren der Platte (1) verlängertes Verbindungsrohr (3) angebracht sind, wobei dieser Kanal (4) durch einen Kanal (5) mit einer Aussparung verbunden ist, dadurch gekennzeichnet, daß jeder Kanal (5) mit einem Auslaßvorrichtung (6) versehen ist, die mit einer Zuleitung (8) in Verbindung steht, die mit einer das Durchsatzvolumen begrenzenden Schraube (9) und mindestens einer Mikrometerschraube (7) ausgestattet ist.

2. Vorrichtung nach Anspruch 1, dadurch gekennzeichnet, daß die Aussparungen mit Heizsystemen (13) ausgestattet sein können.

3. Vorrichtung nach einem der Ansprüche 1 oder 2, dadurch gekennzeichnet, daß die Düse (F) und/oder die Form in die Aussparung (2) so eingepaßt sind, daß die Achse des Kanals (5) mit der Eintrittsachse der Düse und/oder Form übereinstimmt.

4. Verwendung der Vorrichtung nach einem der Ansprüche 1 bis 3 zur Herstellung mindestens zweier komplexer Materialien, die zusammengesetzt sind aus einer verschiedene Kerne bedeckenden, gleichartigen plastischen Harzbeschichtung.

5. Verwendung nach Anspruch 4, dadurch gekennzeichnet, daß die plastische Harzbeschichtung gebildet wird aus allen extrudierbaren und/oder zu Filmen verarbeitbaren Harzen.

6. Verwendung nach Anspruch 5, dadurch gekennzeichnet, daß die plastischen Harze ausgewählt sind aus der Gruppe von Vinylpolymeren oder -copolymeren, Styrolpolymeren oder -copolymeren, Acrylpolymeren oder -copolymeren oder Methacrylpolymeren oder -copolymeren, olefinischen Polymeren oder olefinischen Copolymeren, fluorierten Harzen, Polyamiden, Polyestern, Polycarbonaten, Cellulosepropionaten, Polyphenylensulfonen, Polyamidimiden, Polyimiden, Polyetherimiden, Polyestersulfonen, Polyetheretherketonen und Mischungen dieser Verbindungen.

7. Verwendung nach Anspruch 4, dadurch gekennzeichnet, daß der Kern des komplexen Materials ausgewählt ist aus flüssigen oder festen Materialien, die durch eine Form und/oder eine Düse fließen können.

8. Verwendung nach Anspruch 7, dadurch gekennzeichnet, daß der Kern aus metallischen, organischen, anorganischen, pflanzlichen Fäden, Fasern und Pulvern und Mischungen dieser verschiedenen Bestandteile besteht.

9. Verwendung nach Anspruch 8, dadurch gekennzeichnet, daß die organischen Fasern ausgewählt sind aus Polyamidfasern, Polyesterfasern und polyfluorierten Fasern.

10. Verwendung nach Anspruch 8, dadurch gekennzeichnet, daß die metallischen Fäden ausgewählt sind aus Kupfer-, Aluminium- und Eisenfäden.

11. Verwendung nach Anspruch 7, dadurch gekennzeichnet, daß die pflanzlichen Fasern ausgewählt sind aus Baumwolle-, Sisal-, Wolle-, Leinen-, Seiden- und Holzfasern.

12. Verwendung nach Anspruch 7, dadurch gekennzeichnet, daß die anorganischen Fasern ausgewählt sind aus Glas-, Kohle- und Keramikfasern.

13. Verwendung nach Anspruch 7, dadurch gekennzeichnet, daß die organischen und/oder anorganischen Fasern mit vollen, porösen oder hohlen Füllstoffen imprägniert sind.

14. Verwendung nach Anspruch 13, dadurch gekennzeichnet, daß die vollen, porösen oder hohlen Füllstoffe ausgewählt sind aus pulver-, kugel- oder lamellenförmigen, organischen, metallischen oder anorganischen Materialien.

15. Verwendung nach Anspruch 14, dadurch gekennzeichnet, daß die organischen Pulver ausgewählt sind aus Polyamid-, Polymethylmethacrylat- und Graphitpulvern.

16. Verwendung nach Anspruch 14, dadurch gekennzeichnet, daß die Metallpulver ausgewählt sind aus Molybdänsulfidpulvern.

17. Verwendung nach Anspruch 4, dadurch gekennzeichnet, daß man mindestens zwei zerbrechliche Kerne bei der Extrusionstemperatur eines einheitlichen Beschichtungsmaterials beschichtet.

18. Verwendung nach Anspruch 17, dadurch gekennzeichnet, daß die zerbrechlichen Kerne ausgewählt sind aus inerten und/oder reaktiven Pulvern.

19. Verwendung nach Anspruch 18, dadurch gekennzeichnet, daß die reaktiven Pulver ausgewählt sind aus Katalysatorpulvern, Treibmitteln, Enzympulvern, Lebensmittelpulvern, Mikroorganismenpulvern und Mischungen dieser verschiedenen Bestandteile.

20. Verwendung nach den Ansprüchen 18 und 19, dadurch gekennzeichnet, daß die inerten Pulver ausgewählt sind aus Polyolefin- und Polyamidpulvern.
